# EUROPEAN PATENT APPLICATION

(11) **EP 1 791 354 A2**
(43) Date of publication of application: **30.05.2007**
(21) Application number: 06122097.6
(22) Date of filing: 11.10.2006
(51) Int. Cl.: H04N 5/50

(54) **Apparatus for automatically changing channel and method thereof**

(30) Priority: 25.11.2005 KR 20050113652
(71) Applicant: Samsung Electronics Co., Ltd., Seoul 442-742 (KR)
(72) Inventor: Lim, Chea-il, Yeongtong-gu, Gyeonggi-do, Suwon-si (KR)
(74) Representative: Waddington, Richard

(57) **Abstract**

A method of automatically changing a channel to enhance user convenience in an image processing device. If a channel changing event in which the broadcast signal is not normally received from the service channel occurs, an image processing device sets an automatic changing channel to automatically change a service channel into a certain channel. Accordingly, whenever the channel changing event occurs, as a user does not need to search for channels and change a service channel, the television can enhance user convenience.

## Description

Apparatuses and methods consistent with the present invention relate to automatically changing a channel, and more particularly, to automatically changing a channel into a viewable channel when a user cannot normally view a broadcast on an image processing device.

Televisions are image processing devices which output an image and a voice corresponding to a broadcasting signal received through an antenna, or an image signal and a voice signal received from an external input device.

Recently, as cable broadcasting and digital broadcasting are becoming more widespread, the number of broadcasting channels have increased and also the number of broadcast programs have increased. Each broadcasting channel can limit service authorization of various broadcast programs. For example, a broadcasting channel can provide a broadcast program free or charged, and provide a broadcast program with an age limit. In addition, a broadcasting channel can stop a broadcast program service for a certain amount of time by designating a certain broadcasting time as a screen adjustment time or broadcast break time.

If a broadcast program limiting service authorization is received or broadcasting is stopped, a user can no longer view the broadcast program. Whenever this kind of event occurs, a user has to search for another available channel to tune to so that user convenience is lowered.

Illustrative, non-limiting embodiments of the present invention overcome the above disadvantages and other disadvantages not described above. Also, the present invention is not required to overcome the disadvantages described above, and an illustrative, non- limiting embodiment of the present invention may not overcome any of the problems described above.

The present invention provides a method of automatically changing a channel to enhance user convenience when a certain event occurs.

According to the present invention there is provided an apparatus and method as set forth in the appended claims. Preferred features of the invention will be apparent from the dependent claims, and the description which follows.

According to an aspect of the present invention, there is provided a method of automatically changing a channel, comprising, if a certain channel of multiple channels is selected as a service channel, receiving a broadcast signal from the service channel and displaying a broadcast program, and if a channel changing event in which the broadcast signal is not normally received from the service channel occurs, automatically changing the service channel into an automatic changing channel.

Preferably, changing the service channel into the automatic changing channel comprises, if the channel changing event occurs in the service channel, setting the automatic changing channel as the service channel, and outputting an image and a voice corresponding to a broadcast signal received from the changed service channel.

Preferably, if the channel changing event ends, the service channel may be automatically changed into the original channel.

Preferably, a certain channel may be set as the automatic changing channel.

Preferably, the channel changing event comprises a service limit event in which a broadcast program limiting authority to view from the service channel is received, and a broadcast ending event in which a broadcast service of the service channel stops for a certain period of time.

Preferably, the broadcast program limiting authority to view may have encrypted broadcast signals.

According to another aspect of the invention, a method of automatically changing a channel comprises, when a channel changing event in which the broadcast signal is not normally received from the service channel occurs, displaying a channel list to change the service channel into an automatic changing channel, and if a certain channel of the channel list is selected, registering the selected channel as the automatic changing channel.

Preferably, if the channel changing event ends, an automatic return menu may be set to reset the original channel as the service channel.

Preferably, each channel may have the different automatic changing channel or have the same automatic changing channel.

Accordingly, whenever the channel changing event occurs, the television can enhance user convenience, as a user does not need to search for channels and change a service channel.

According to another aspect of the present invention, there is provided a broadcast receiving apparatus comprising a display which is operable to display a video corresponding to a broadcast signal received from a service channel, and a controller which is operable to automatically change the service channel into an automatic changing channel when a channel changing event occurs, in which the broadcast signal is not normally received from the service channel.

Preferably, the controller may be operable to set the automatic changing channel as the service channel when the channel changing event occurs in the service channel, and the display may output a video corresponding to a broadcast signal received from the changed service channel.

Preferably, the controller is operable to automatically change the service channel into an original channel when the channel changing event ends.

Preferably, the controller is operable to set certain channel as the automatic changing channel.

Preferably, the channel changing event comprises at least one of a service limit event in which a broadcast program limiting authority to view from the service channel is received, and a broadcast ending event in which a broadcast service of the service channel stops for a certain period of time.

Preferably, the broadcast program limiting authority to view may have encrypted broadcast signals.

According to another aspect of the present invention, a broadcast receiving apparatus comprises a display which is operable to display a channel list to change a service channel into an automatic changing channel when a channel changing event in which a broadcast signal is not normally received from a service channel occurs, and a controller which is operable to register the selected channel as the automatic changing channel when a certain channel of the channel list is selected.

Preferably, the controller is operable to set an original channel as the service channel when the channel changing event ends.

Preferably, the controller is operable to set each channel to have the different automatic changing channel or have the same automatic changing channel.

For a better understanding of the invention, and to show how embodiments of the same may be carried into effect, reference will now be made, by way of example, to the accompanying diagrammatic drawings in which:
FIG. 1 is a block diagram showing the configuration of a television according to an exemplary embodiment of the present invention;
FIG. 2 is a flow chart showing the process of automatically changing a channel according to an exemplary embodiment of the present invention;
FIG. 3 is a flow chart showing the process of setting an automatic changing channel in FIG. 2;
FIG. 4 is a view showing an example that an automatic changing channel list is displayed on a display part of FIG. 1;
FIG. 5 is a flow chart showing the process of changing a service channel into an automatic changing channel when a channel changing event is a service limiting broadcast program in FIG. 2; and
FIG. 6 is a flow chart showing the process of changing a service channel into an automatic changing channel when a channel changing event is a broadcast ending event in FIG. 2.

Hereinafter, exemplary embodiments of the present invention will be described in detail with reference to the accompanying drawing figures.

In the following description, same drawing reference numerals are used for the same elements even in different drawings. The matters defined in the description such as detailed construction and elements are only provided to assist in a comprehensive understanding of the invention. Thus, it is apparent that exemplary embodiments of the present invention can be carried out without those defined matters. Also, well-known functions or constructions are not described in detail since they would obscure the invention in unnecessary detail.

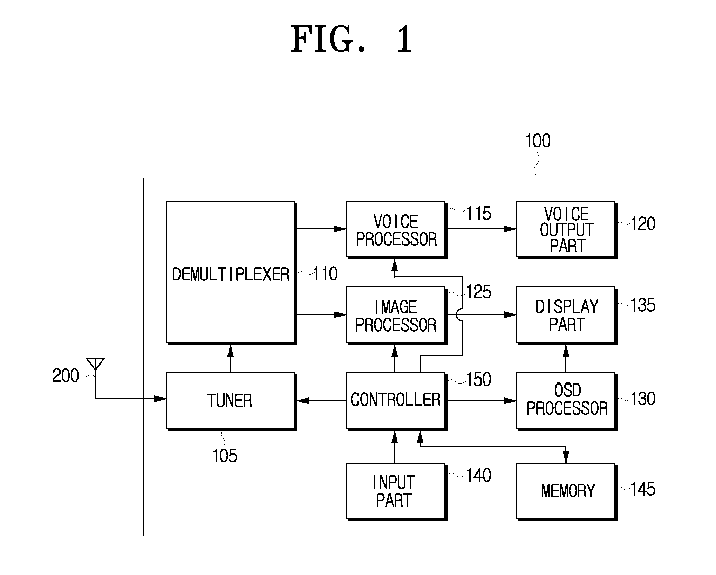

FIG. 1 is a block diagram showing the configuration of a television according to an exemplary embodiment of the present invention.

Referring to FIG. 1, a television 100 according to exemplary embodiments of the present invention includes a tuner 105, a demultiplexer 110, a voice processor 115, a voice output part 120, an image processor 125, an on screen display (OSD) processor 130, a display part 135, an input part 140, a memory 145 and a controller 150.

In detail, the tuner 105 sets a certain channel of multiple channels as a service channel, receives a broadcast signal of the service channel through an external antenna 200, and transmits the broadcast signal to the demultiplexer 110. In digital broadcasting, 1 to 7 channels are provided for one frequency band.

The demultiplexer 110 divides the broadcast signal received from the tuner 105 into an image signal and a voice signal to transmit to the image processor 125 and the voice processor 115, respectively.

The voice processor 115 decodes the voice signal received from the demultiplexer 110, and the voice output part 120 receives the voice signal from the voice processor 115 and outputs a voice.

The image processor 125 decodes the image signal received from the demultiplexer 110 to transmit to the display part 135.

The OSD processor 130 generates an OSD signal according to control of the controller 150 to transmit to the display part 135.

The display part 135 receives the image signal from the image processor 125 to display an image, and receives the OSD signal from the OSD processor 130 to display an OSD letter, for example, an OSD menu. The OSD menu provides a image quality setting menu, which adjusts image quality-related items, a channel changing menu, which automatically changes a service channel into a certain channel, and so on.

The channel changing menu is a menu which registers a certain channel to automatically change a service channel into another channel when a channel changing event occurs in the service channel. The channel changing event means when a broadcast signal is not normally received from the service channel. There are channel changing events such as a service limit event, providing a broadcast program limited according to user's service authority, and a broadcast break event, stopping a broadcast service of the service channel for a certain amount of time.

The service limit event occurs in the case of a charged broadcast program or a broadcast program limited according to the user's age. Especially, as a charged broadcast program is provided with broadcast signals encrypted, the television 100 can display a charged broadcast program only when a user is registered to view the charged broadcast program.

Meanwhile, the input part 140 generates an input signal according to user's operation to transmit to the controller 150. There are the input signal such as a channel change request signal to change an input channel, a volume control signal to control a volume of the voice output part 120, a power control signal to switch on/off power of the television 100, and a menu request signal to display an OSD menu. The input part 140 may be a keypad integrally formed with the main body of the television 100, or a remote controller separated from the main body of the television 100.

The memory 145 stores data required for operation of the television 100 according to control of the controller 150. The data can be data related to configuration of the television 100, data input from the outside, data generated in the television 100, and programs driven in the television 100.

The controller 150 outputs a control signal controlling the tuner 105, the voice processor 115, the image processor 125, the on screen display (OSD) processor 130 and the memory 145 according to an input signal received from the input part 140. Specifically, when receiving the channel change request signal from the input part 140, the controller 150 generates a control signal to change the service channel into a new channel and transmits the signal to the tuner 105.

Especially, when a channel changing event occurs, the controller 150 receives a certain channel through the channel changing menu to automatically change the service channel and sets the channel as the automatic changing channel. Accordingly, if a channel changing event occurs in the present service channel, the controller 150 generates a control signal setting the channel registered for the automatic changing channel as a service channel to transmit to the tuner 105. The tuner 105 sets the channel registered for the automatic changing channel as a service channel according to the control signal.

Thus, if a channel changing event occurs in the service channel, the television 100 automatically changes the service channel into the channel registered for the automatic changing channel. Accordingly, a user's manual inconvenience is avoided whenever a channel changing event occurs, and the service channel is automatically changed into a channel already registered by the user so that the user's convenience is enhanced.

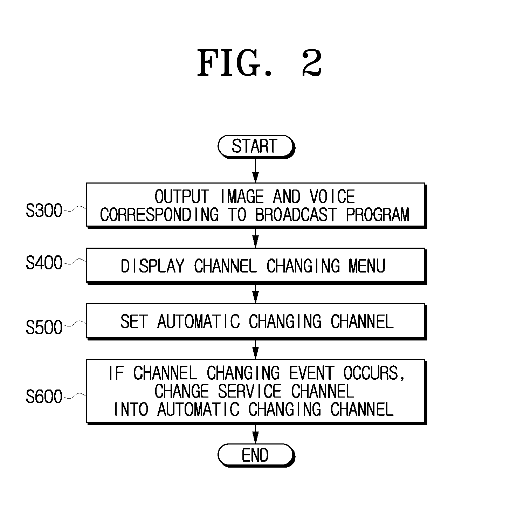

FIG. 2 is a flow chart showing the process of automatically changing a channel according to an exemplary embodiment of the present invention.

Referring to FIG. 1 and FIG. 2, first, the tuner 105 receives a broadcast signal from a channel set as a service channel, the voice output part 120 outputs a voice corresponding to the broadcast signal, and the display part 135 displays an image corresponding to the broadcast signal (S300). Consequently, a user can view a broadcast program corresponding to the broadcast signal.

Subsequently, if the controller 150 receives an OSD menu display request from the input part 140 according to a user's operation, the OSD processor 130 outputs an OSD signal according to control of the controller 150 to transmit to the display part 135, and the display part 135 receives the OSD signal and displays an OSD menu. Next, if a channel changing menu of the OSD menu is selected according to user's operation, the display part 135 displays the channel changing menu (S400).

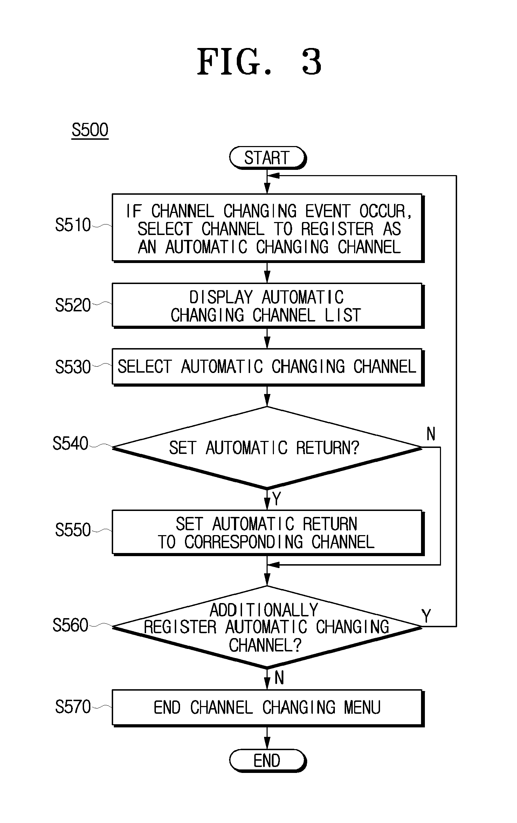

If a certain channel of the channel changing menu is selected according to a user's operation, the selected channel is set as the automatic changing channel (S500). The process of setting the automatic changing channel will be described in detail in FIG. 3.

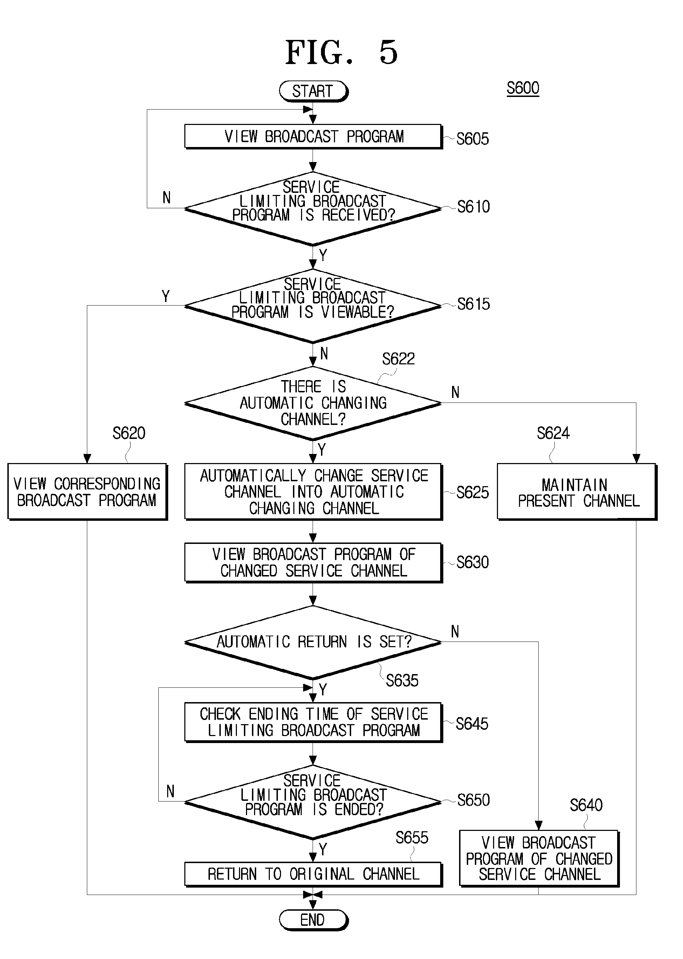

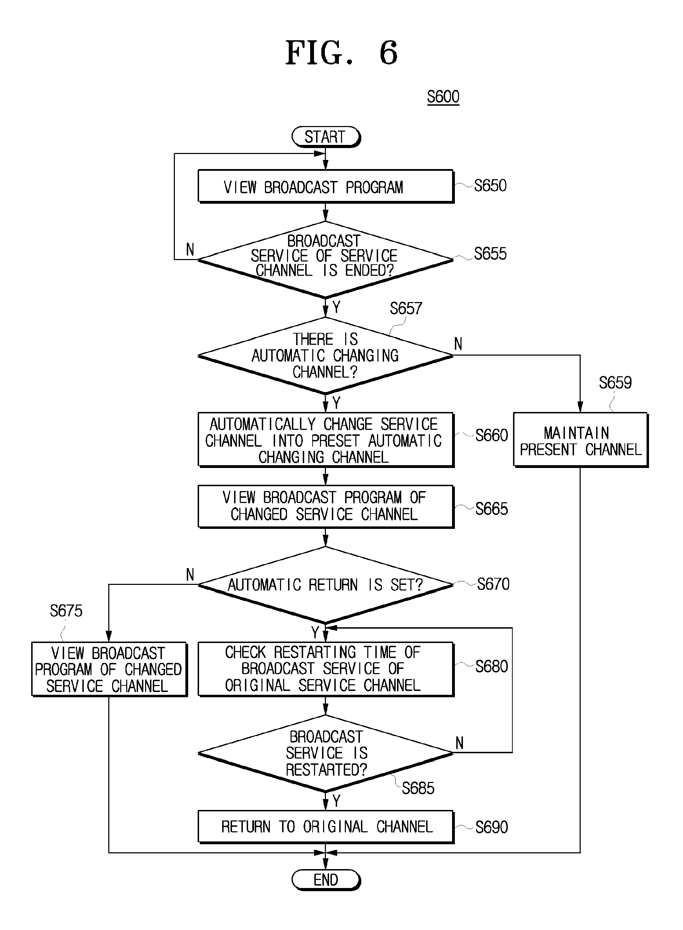

Subsequently, if a channel changing event occurs while displaying a broadcast program of a service channel, the channel registered for the automatic changing channel in S500 is automatically changed into a service channel (S600). The process of automatically changing a service channel will be described in detail in FIG. 5 and FIG. 6.

FIG. 3 is a flow chart showing the process of setting an automatic changing channel in FIG. 2.

Referring to FIG. 1 and FIG. 3, when a channel changing event occurs in a service channel, the controller 150 receives a certain channel through the channel changing menu to automatically change the service channel into the automatic changing channel (S510). Subsequently, the controller 150 displays an automatic changing channel list to select channels to register for an automatic changing channel of the corresponding channel (S520).

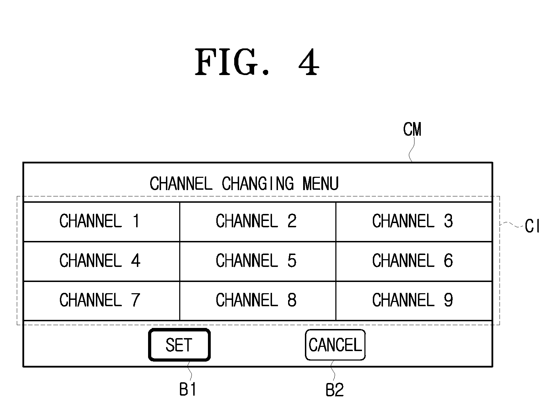

FIG. 4 is a view showing an example in which an automatic changing channel list is displayed on a display part of FIG. 1.

Referring to FIG. 4, the channel changing menu CM includes an automatic changing channel list CI, a set button B1 and a cancel button B2. The automatic changing channel list CI represents channels to set as an automatic changing channel in a list form when a channel is selected to register the automatic changing channel. After a certain channel is selected on the automatic changing channel list CI, if the set button B1 is selected, the selected channel is set as the automatic changing channel. For example, assuming that an automatic changing channel for channel 10 is channel 1 and an automatic changing channel for channel 22 is channel 6, if a channel changing event occurs in channel 10, the service channel is automatically changed into channel 1. Or, if a channel changing event occurs in channel 22, the service channel is automatically changed into channel 6.

Again referring to FIG. 1 and FIG. 3, if a certain channel is selected on the automatic changing channel list according to a user's operation, the controller 150 sets the selected channel as the automatic changing channel (S530).

Subsequently, if a channel changing event ends after automatically changing the service channel, the controller 150 determines whether to select an automatic return menu, which returns the changed service channel to the original channel (S540).

In S540, if the automatic return menu is selected, the controller 150 sets to automatically change the changed service channel into the original channel if a channel changing event ends after automatically changing the service channel (S550). For example, assuming that an automatic changing channel for channel 10 is channel 1 and the automatic return menu is set, if a channel changing event occurs in the service channel of channel 10, the service channel is automatically changed into channel 1. If the channel changing event then ends, the service channel is automatically returned to channel 10.

If the automatic return menu is not selected in S540 or after S550 is performed, the controller 150 determines whether to finish the channel changing menu (S560).

In S560, if the controller 150 receives a command to register an automatic changing channel for another channel, the controller 150 feedbacks to S510.

In S560, if the controller 150 receives a command to finish the channel changing menu, the controller 150 finishes the channel changing menu, and the voice processor 115 and the display part 135 outputs a broadcast program provided from the service channel (S570).

In this exemplary embodiment, an automatic changing channel varies according to each channel in the television 100. Accordingly, when a channel changing event occurs, an automatic changing channel depends on the present service channel. However, when a channel changing event occurs, one channel can be set as an automatic changing channel regardless of the present service channel. For example, if an automatic changing channel for channel 1 is channel 10, when a channel changing event occurs, the service channel is changed into channel 10. Likewise, if the present service channel is channel 2, when a channel changing event occurs, the service channel is changed into channel 10.

FIG. 5 is a flow chart showing the process of changing a service channel into an automatic changing channel when a channel changing event is a service limiting broadcast program in FIG. 2.

Referring to FIG. 1 and FIG. 5, first, the voice output part 120 outputs a voice corresponding to a broadcast signal received from a service channel, and the display part 135 displays an image corresponding to the broadcast signal received from the service channel (S605). Consequently, a user can view a broadcast program corresponding to the broadcast signal.

Subsequently, the controller 150 determines whether a service limiting event, providing a service limiting broadcast program from the service channel, occurs (S610). The service limiting broadcast program, especially, a paid broadcast program is provided with broadcast signals encrypted. Whether to be encrypted is determined through an encrypted flag value, for example, a value of 'free_CA_mode'. That is, if a value of 'free_CA_mode' is '0', the broadcast signal is not encrypted, and if a value of 'free_CA_mode' is '1', the broadcast signal is encrypted.

If a service limiting broadcast program is not received in S610, the controller 150 maintains the present state (S605).

On the other hand, if a service limiting broadcast program is received in S610, the controller 150 determines whether there is authority to view the corresponding broadcast program (S615). If there is authority, the voice processor 115 and the display part 135 output a voice and image corresponding to the broadcast program, respectively (S620).

If there is no authority in S615, the controller 150 determines whether there is an automatic changing channel (S622).

If there is no automatic changing channel in S622, the present service channel is maintained (S624). The controller 150 can receive a certain channel according to user operation to change the service channel.

On the other hand, if there is an automatic changing channel in S622, the controller 150 changes the service channel into the preset automatic changing channel (S625). Thus, the television 100 automatically changes the service channel into the preset automatic changing channel when a broadcast program of the present service channel can not be displayed due to service limits. Accordingly, as a user does not need to search for channels and change a service channel whenever a service limiting event occurs, the television 100 can enhance user convenience.

Next, the voice output part 120 and the display part 135 output a voice and image respectively corresponding to a broadcast signal received from the changed service channel (S630).

Subsequently, the controller 150 determines whether the automatic return menu is also set when the automatic changing channel is set (S635). If the automatic return menu is not set, the display part 135 displays a broadcast program provided from the changed service channel until the controller 150 receives a channel changing command (S640).

Meanwhile, in S635, if the automatic return menu is determined to be set, the controller 150 checks ending time of the service limiting broadcast program (S645).

Next, the controller 150 determines whether the service limit broadcast program is finished (S650). If the service limit broadcast program is not finished, the controller 150 maintains the present state (S645).

If the service limit broadcast program is finished in S650, the service channel is changed into the original channel (S655).

FIG. 6 is a flow chart showing the process of changing a service channel into an automatic changing channel when a channel changing event is a broadcast ending event in FIG. 2.

Referring to FIG. 1 and FIG. 6, first, the voice output part 120 outputs a voice corresponding to a broadcast signal received from a service channel, and the display part 135 displays an image corresponding to the broadcast signal received from the service channel (S650). Consequently, a user can view a broadcast program corresponding to the broadcast signal.

Subsequently, the controller 150 determines whether a broadcast ending event stopping a broadcast service of the service channel for a period of time occurs (S655).

If a broadcast signal is normally received in S655, the controller 150 maintains the present state (S650). If a broadcast ending event occurs, the controller 150 determines whether there is an automatic changing channel (S657).

If there is no automatic changing channel in S657, the present service channel is maintained (S659). The controller 150 can receive a certain channel according to user operation to change the service channel.

On the other hand, if there is an automatic changing channel in S657, the controller 150 changes the service channel into the preset automatic changing channel (S660). Thus, the television 100 automatically changes the service channel into the preset automatic changing channel when a broadcast program of the present service channel can not be displayed due to broadcast service ending. Accordingly, as a user does not need to search for channels and change a service channel whenever a broadcast ending event occurs, the television 100 can enhance user convenience.

Next, the voice output part 120 and the display part 135 output a voice and image respectively corresponding to a broadcast signal received from the changed service channel (S665).

Subsequently, the controller 150 determines whether the automatic return menu is also set when the automatic changing channel is set (S670). If the automatic return menu is not set, the display part 135 displays a broadcast program provided from the changed service channel until the controller 150 receives a channel changing command (S675).

Meanwhile, in S670, if the automatic return menu is determined to be set, the controller 150 checks broadcast restarting time of the original channel (S680).

Next, the controller 150 determines whether a broadcast service of the original channel restarts (S685). If a broadcast service of the original channel does not restart yet, the controller 150 maintains the present state (S680).

If a broadcast service of the original channel restarts in S685, the service channel is changed into the original channel (S690).

As can be appreciated from the above description, an automatic changing channel is set according to a user's selection. If a channel changing event occurs in the service channel, the service channel is changed into an automatic changing channel. Accordingly, whenever a channel changing event in which a user can not normally view a broadcast program of the present service channel occurs, as a user does not need to search for channels and change a service channel, the television can enhance user convenience.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of automatically changing a channel, comprising:
(a) receiving a broadcast signal from the service channel and displaying a broadcast program when a certain channel of multiple channels is selected as a service channel; and
(b) automatically changing the service channel into an automatic changing channel when a channel changing event occurs, in which the broadcast signal is not normally received from the service channel.

2. The method of claim 1, wherein (b) comprises:
(b-1) setting the automatic changing channel as the service channel when the channel changing event occurs in the service channel; and
(b-2) outputting an image and a voice corresponding to a broadcast signal received from the changed service channel.

3. The method of claim 1 or claim 2, further comprising:
(c) automatically changing the service channel into an original channel when the channel changing event ends.

4. The method of any preceding claim, wherein a certain channel is set as the automatic changing channel prior to (a).

5. The method of any preceding claim, wherein the channel changing event comprises:
a service limit event in which a broadcast program limiting authority to view from the service channel is received; and
a broadcast ending event in which a broadcast service of the service channel stops for a certain period of time.

6. The method of claim 5, wherein the broadcast program limiting authority to view has encrypted broadcast signals.

7. A method of automatically changing a channel, comprising:
(a) displaying a channel list to change a service channel into an automatic changing channel when a channel changing event in which a broadcast signal is not normally received from the service channel occurs; and
(b) registering the selected channel as the automatic changing channel when a certain channel of the channel list is selected.

8. The method of claim 7, further comprising:
(c) setting an automatic return menu to reset an original channel as the service channel when the channel changing event ends.

9. The method of claim 7 or claim 8, wherein each channel has a different automatic changing channel.

10. The method of any one of claims 7 to 9, wherein each channel has the same automatic changing channel.

11. A broadcast receiving apparatus, comprising:
a display (135) which is operable to display a video corresponding to a broadcast signal received from a service channel; and
a controller (150) which is operable to automatically change the service channel into an automatic changing channel when a channel changing event occurs, in which the broadcast signal is not normally received from the service channel.

12. The apparatus of claim 11, wherein the controller (150) is operable to set the automatic changing channel as the service channel when the channel changing event occurs in the service channel; and
the display (135) is operable to output a video corresponding to a broadcast signal received from the changed service channel.

13. The apparatus of claim 11 or claim 12, wherein the controller (150) is operable to automatically change the service channel into an original channel when the channel changing event ends.

14. The apparatus of any one of claims 11 to 13, wherein the controller (150) is operable to set a certain channel as the automatic changing channel.

15. The apparatus of any one of claims 11 to 14, wherein the channel changing event comprises at least one of:
a service limit event in which a broadcast program limiting authority to view from the service channel is received; and
a broadcast ending event in which a broadcast service of the service channel stops for a certain period of time.

16. The apparatus of claim 15, wherein the broadcast program limiting authority to view has encrypted broadcast signals.

17. A broadcast receiving apparatus, comprising:
a display (135) which is operable to display a channel list to change a service channel into an automatic changing channel when a channel changing event in which a broadcast signal is not normally received from a service channel occurs; and
a controller (150) which is operable to register the selected channel as the automatic changing channel when a certain channel of the channel list is selected.

18. The apparatus of claim 17, wherein the controller (150) is operable to set an original channel as the service channel when the channel changing event ends.

19. The apparatus of claim 17 or claim 18, wherein the controller (150) is operable to set each channel to have the different automatic changing channel.

20. The apparatus of any one of claims 17 to 18, wherein the controller (150) is operable to set each channel to have the same automatic changing channel.
